(19) Europäisches Patentamt
European Patent Office
Office européen des brevets

(11) EP 3 546 992 A1

(12) # EUROPEAN PATENT APPLICATION
published in accordance with Art. 153(4) EPC

(43) Date of publication:
**02.10.2019 Bulletin 2019/40**

(21) Application number: **17873991.8**

(22) Date of filing: **31.10.2017**

(51) Int Cl.:
***G02B 5/30** (2006.01)* ***B05D 1/08** (2006.01)*
***B05D 1/18** (2006.01)* ***B05D 1/40** (2006.01)*

(86) International application number:
**PCT/JP2017/039282**

(87) International publication number:
**WO 2018/096879 (31.05.2018 Gazette 2018/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.11.2016 JP 2016229430**
**13.10.2017 JP 2017199930**

(71) Applicant: **FUJIFILM Corporation**
**Tokyo 106-8620 (JP)**

(72) Inventors:
- **FUJIKI, Yuzo**
**Minamiashigara-shi**
**Kanagawa 250-0193 (JP)**
- **TAKEDA, Jun**
**Minamiashigara-shi**
**Kanagawa 250-0193 (JP)**
- **INOUE, Rikio**
**Minamiashigara-shi**
**Kanagawa 250-0193 (JP)**

(74) Representative: **Klunker IP**
**Patentanwälte PartG mbB**
**Destouchesstraße 68**
**80796 München (DE)**

(54) **METHOD FOR PRODUCING OPTICAL ARTICLE AND OPTICAL ARTICLE**

(57) Provided are a method of producing an optical article including a cured layer of a liquid crystal compound on a surface of a solid base body having a curved surface, the surface including at least a part of the curved surface, and having uniform optical properties in the cured layer and an optical article. A liquid crystal composition containing a liquid crystal compound and a solvent having a viscosity of 4.0 mPa·s or less and a relative evaporation rate of 5.0 or less in a case where the evaporation rate of butyl acetate is 1.0, in which a proportion of the solvent is 20% by mass or more in all the solvents, is applied directly or via another layer on the surface of the solid base body having the curved surface, the surface including at least a part of the curved surface, and then the liquid crystal compound is cured. The coating includes a spray coating step of applying the liquid crystal composition by spray coating while keeping a constant distance between a spray nozzle and the surface in a normal direction, a spin coating step of applying the liquid crystal composition by spin coating, or a dip coating step of applying the liquid crystal composition by dip coating.

FIG. 1

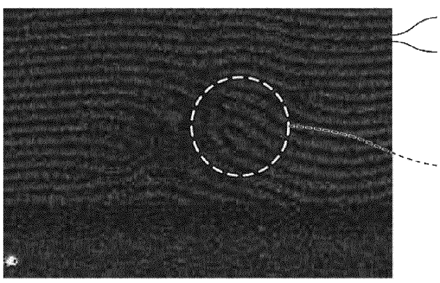


EP 3 546 992 A1

## Description

## BACKGROUND OF THE INVENTION

1. Field of the Invention

The present invention relates to a method of producing an optical article and an optical article.

2. Description of the Related Art

In the related art, an optical layer including a cured layer formed by curing a liquid crystal compound provided on a plane has been known, and for example, a phase difference plate having a λ/4 or λ/2 phase difference disclosed in WO2013/137464A and a cholesteric liquid crystal film for decoration disclosed in JP1994-186534A (JP-H06-186534A) are exemplified.

On the other hand, as an optical layer including a cured layer formed by curing a liquid crystal compound provided on a curved surface, for example, optical elements in which an ophthalmic base material, such as a lens, is coated with a liquid crystal compound are disclosed in JP2007-519013A and JP2012-032527A are exemplified.

In addition, JP2012-236125A proposes a method and an apparatus for producing a polymer ultrathin film having a film thickness of nanometer level on the surface of a base body including not only a plane but also a curved surface.

## SUMMARY OF THE INVENTION

In recent years, as in WO2013/137464A and JP1994-186534A (JP-H06-186534A), a technology capable of forming a film having a sufficiently uniform thickness in a case of forming an optical layer formed of a liquid crystal compound on the plane has been developed. On the other hand, as in JP2007-519013A and JP2012-032527A, it is very difficult to uniformly form an optical layer formed of a liquid crystal compound on the curved surface of a base material, and there is no sufficient knowledge.

In an example of JP2012-236125A relating to a method and an apparatus for producing a polymer ultrathin film, it is described that the film thickness of the cross section of a nanosheet formed on the surface of a solid object is 90.02 ± 23.68 nm. That is, the change rate of the film thickness of this nanosheet is about 50% of the film thickness.

In a case where an optical layer formed of a liquid crystal compound is used as, for example, a phase difference plate, when the film thickness is changed, a uniform phase difference cannot be given and the function as a uniform phase difference plate cannot be exhibited. In addition, in a case where the film thickness is changed, the reflection wavelength of a cholesteric liquid crystal exhibiting wavelength selective reflexibility is changed. That is, the uniformity in film thickness is very important in the optical layer formed of the cured layer of the liquid crystal compound to obtain uniform optical properties by the liquid crystal compound.

The optical layer formed of the liquid crystal compound has a thickness of substantially 6000 nm (= 6 μm) or less. A technology of uniformly forming an optical layer having a thickness of 6000 nm or less on a curved surface has not yet been known.

An object of the present invention is to provide a method of producing an optical article including a cured layer of a liquid crystal compound on a surface of a solid base body having a curved surface, the surface including at least a part of the curved surface, and having uniform optical properties in the cured layer, and an optical article.

A method of producing an optical article according to the present invention comprising: a coating step of applying a liquid crystal composition which includes a liquid crystal compound, and a solvent having a viscosity of 4.0 mPa·s or less and a relative evaporation rate of 5.0 or less in a case where an evaporation rate of butyl acetate is 1.0, and in which a proportion of the solvent is 20% by mass or more in all solvents, directly or via another layer on a surface of a solid base body having a curved surface, the surface including at least a part of the curved surface;
a heating step of heating the solid base body to which the liquid crystal composition is applied; and
a photocuring step of photocuring the liquid crystal compound to form a cured layer,
in which the coating step is a spray coating step of applying the liquid crystal composition by spray coating while keeping a constant distance between a spray nozzle and the surface in a normal direction, a spin coating step of applying the liquid crystal composition by spin coating, or a dip coating step of applying the liquid crystal composition by dip coating.

In the method of producing an optical article according to the present invention, it is preferable that the coating step is the spray coating step, and the spray coating is performed while rotating the solid base body.

An optical article according to the present invention comprising: a cured layer which is formed by curing a liquid crystal compound and provided directly or via another layer on a surface of a solid base body having a curved surface, the surface including at least a part of the curved surface,
in which a variation in film thicknesses measured at 20 random places on the cured layer is within 10% of an average

film thickness of the film thicknesses measured at the 20 places.

The optical article according to the present invention, it is preferable that the cured layer has an in-plane retardation Re(550) of 90 to 320 nm.

Further, in this case, it is preferable that an average film thickness of the cured layer is 500 to 6000 nm.

In the optical article according to the present invention, the cured layer may be a cholesteric liquid crystal layer having wavelength selective reflexibility.

Further, in this case, it is preferable that the cured layer has a stripe pattern of bright zone and dark zone in a cross section thereof to be observed with a scanning electron microscope, the stripe pattern has a waving structure, and an average value of peak-to-peak distances of the waving structure is 0.5 to 50 μm.

According to the present invention, it is possible to obtain an optical article, which is a solid object having a curved surface and emits light in which a polarization state of an incidence ray is uniformly changed, or a high quality optical article having a high degree of design through an optical action.

## BRIEF DESCRIPTION OF THE DRAWINGS

Fig. 1 is a cross-sectional SEM image of a general cholesteric liquid crystal layer.
Fig. 2 is a schematic view showing a cross section of a general cholesteric liquid crystal layer.
Fig. 3 is a schematic view showing a cross section of a cholesteric liquid crystal layer having a waving structure.

## DESCRIPTION OF THE PREFERRED EMBODIMENTS

Hereinafter, the present invention will be described in detail. The description of the constitutional elements described below is made based on representative embodiments of the present invention, but the present invention is not limited to such embodiments. In the present specification, a numerical range represented by using "to" indicates a range including the numerical values before and after "to" as the lower limit and the upper limit.

In addition, it is defined that the terms "orthogonal" and "parallel" with respect to angles mean ranges expressed by precise angle ± 10°, and the terms "identical" and "different" with respect to an angle can be determined based on a criterion that whether the difference is less than 5° or not.

In addition, in the present specification, the term "visible light" refers to light in a wavelength range of from 380 nm to 780 nm. Further, in the present specification, the measurement wavelength is 550 nm unless otherwise specified.

In the present specification, the term "slow axis direction" means a direction in which the refractive index is maximized in a plane. In a case of a slow axis of a phase difference film, the slow axis of the whole phase difference film is intended.

「Optical Article」

An optical article according to an embodiment of the present invention comprises a cured layer which is formed by curing a liquid crystal compound and provided directly or via another layer on a surface of a solid base body having a curved surface, the surface including at least a part of the curved surface. This cured layer is an optical layer formed by applying a liquid crystal composition which includes a liquid crystal compound and a solvent having a viscosity of 4.0 mPa·s or less and a relative evaporation rate of 5.0 or less in a case where the evaporation rate of butyl acetate is 1.0, and in which a proportion of the solvent is 20% by mass or more in all the solvents, and curing the liquid crystal compound in the liquid crystal composition. In the liquid crystal composition, the proportion of the solvent having a viscosity of 4.0 mPa·s or less and a relative evaporation rate of 5.0 or less in a case where the evaporation rate of butyl acetate is 1.0 is 20% by mass or more in all the solvents. Then, a variation in film thicknesses measured at 20 random places in the cured layer is within 10% of an average film thickness of the film thicknesses measured at the 20 places.

Since the film thickness is uniform, the cured layer exhibits a uniform optical function over the entire region of the cured layer.

In the following, each member included in the optical article will be described in detail.

1. Solid Base Body

In the present specification, the solid base body is a solid object having a curved surface and solid objects obtained from bending or curving of a film-like object and a sheet-like object formed by two main surfaces are excluded.

The curved surface of the solid base body refers to a curved surface having a curvature radius of 1 mm or more of the curve of any cross section.

The material for the solid base body is not particularly limited and examples thereof include glass, metals, ceramics, and plastics. Examples of the plastics include cellulose derivatives, polyolefin, polyester, polycarbonate, polyacrylate, polymetallate, polyethersulfone, polyolefin, polyphenylene sulfide, polyphenylene sulfide, polyphenylene ether, nylon, and polystyrene.
The solid base body may be transparent, opaque, colorless, or colored. However, the solid base body is preferably transparent and more preferably colorless and transparent.

2. Cured Layer

The cured layer is a layer formed by curing the liquid crystal compound and may include other compounds.

(1) Liquid Crystal Compound

The cured layer is a layer in which the liquid crystal compound is fixed in a predetermined alignment state as it is by crosslinking (polymerization). After the cured layer is formed, the crystallinity does not need to be exhibited.
Generally, liquid crystal compounds can be classified into a rod type (rod-like liquid crystal compound) and a disk type (discotic liquid crystal compound, disk-like liquid crystal compound) according to the shape thereof. Further, respectively have a low molecule type and a polymer type. Generally, the polymer refers to a compound having a degree of polymerization of equal to or greater than 100 ("Physics of Polymers· Dynamics of Phase Transition", Masao Doi, p. 2, Iwanami Shoten, Publishers, 1992). In the present invention, any liquid crystal compound can be used. However, it is preferable to use a discotic liquid crystal compound from the viewpoint of further improving the effect of the present invention. Two or more kinds of rod-like liquid crystal compounds, two or more kinds of discotic liquid crystal compounds, or a mixture of a rod-like liquid crystal compound and a discotic liquid crystal compound may be used.
As a rod-like liquid crystal compound, for example, it is possible to preferably use those described in Claim 1 of JP1999-513019A (JP-H11-513019A) or in paragraphs [0026] to [0098] of JP2005-289980A. As a disk-like liquid crystal compound, it is possible to preferably use those described in paragraphs [0020] to [0067] of JP2007-108732A or in paragraphs [0013] to [0108] of JP2010-244038A. However, the present invention is not limited thereto.
From the viewpoint of being capable of reducing temperature change and humidity change in optical properties, it is more preferable that the cured layer is formed using a liquid crystal compound (rod-like liquid crystal compound or disk-like liquid crystal compound) having a polymerizable group. Two or more kinds of liquid crystal compounds may be used as a mixture, and in this case, at least one kind of liquid crystal compound preferably has two or more polymerizable groups.
That is, it is preferable that the cured layer is a layer formed by fixing a rod-like liquid crystal compound having a polymerizable group or a disk-like liquid crystal compound having a polymerizable group by polymerization.
The kind of the polymerizable group included in the rod-like liquid crystal compound or disk-like liquid crystal compound is not particularly limited, and is preferably a functional group which can cause an addition polymerization reaction and more preferably an ethylenically unsaturated polymerizable group or a cyclic polymerizable group. More specifically, examples thereof preferably include a (meth)acryloyl group, a vinyl group, a styryl group, an allyl group, and the like, and among these, a (meth)acryloyl group is more preferable. However, the term "(meth)acryloyl group" is a concept that encompasses both a methacryloyl group and an acryloyl group.

(2) Film Thickness

The average film thickness of the cured layer is preferably 500 to 6000 nm and more preferably 500 to 5000 nm.
The average film thickness of the cured layer is a value obtained by measuring the film thickness at 20 random places in the cured layer and arithmetically averaging the measured values.
In the present specification, a variation in film thickness is a value calculated from the following equation.

[Variation (%) in film thickness] = ([maximum value of thicknesses measured at 20 random places] - [minimum value of thicknesses measured at 20 random places]) × 0.5 ÷ [average film thickness]

In the optical article according to the embodiment of the present invention, the variation in film thicknesses is within 10% and preferably within 5%.
In the present invention, the in-plane retardation Re(550) of the cured layer is preferably 90 to 320 nm. Here, the in-plane retardation Re(550) is in-plane retardation at a wavelength $\lambda$ of 550 nm. The in-plane retardation Re($\lambda$) can

be measured using, for example, AxoScan OPMF-1 (manufactured by Opto Science, Inc.).

(3) Liquid Crystal Composition Including Liquid Crystal Compound

The cured layer is formed by applying a liquid crystal composition including the liquid crystal compound and a solvent having a viscosity of 4.0 mPa·s or less and a relative evaporation rate of 5.0 or less in a case where the evaporation rate of butyl acetate is 1.0, and curing the liquid crystal compound while volatilizing the solvent.

<Solvent>

The proportion of the solvent having a viscosity of 4.0 mPa·s or less and a relative evaporation rate of 5.0 or less in a case where the evaporation rate of butyl acetate is 1.0 is 20% by mass or more of the all the solvents in the liquid crystal composition.
The relative evaporation rate of at least one kind of solvent included in the liquid crystal composition and having a proportion of 20% by mass or more of all the solvents in a case where the evaporation rate of butyl acetate is 1.0 is preferably 0.01 or more and 5.0 or less, and more preferably 0.10 or more and 3.5 or less. By setting the relative evaporation rate to be within the range, the coating liquid is subjected to leveling on the base body and then dried and fixed so that a uniform film thickness can be achieved. Further, it is possible to prevent the liquid from being dropped to case a difference in film thickness.
The proportion of the solvent having a relative evaporation rate of 5.0 or less in a case where the evaporation rate of butyl acetate is 1.0 in all the solvents is preferably 20% to 100% by mass and more preferably 30% to 100% by mass.
By using the preferable solvent, the uniformity of the film thickness of the cured layer can be improved.
In the present specification, for the relative evaporation rate of the solvent, a value measured by the following manner is adopted. Specifically, two chemical balances with a hood to which nitrogen gas can be supplied are used, and 10 cm φ chalets into which a filter paper No. 5C (9 cm φ) is put are placed on both balances. In one chalet, 0.7 mL of butyl acetate is poured, and in the other chalet, 0.7 mL of a sample is poured, respectively. Nitrogen gas is supplied to each chalet at a flow rate of 30 NL/mL simultaneously at 23°C and a relative humidity of 50% under the atmosphere, and the respective weights of the butyl acetate and the sample are measured simultaneously at each time 30 seconds has elapsed. The relative ratio of the reduction amount of the sample with respect to the reduction amount of the butyl acetate is obtained at 60 seconds, 90 seconds, and 120 seconds, respectively. The relative evaporation rate of the solvent of the sample is calculated as an average value of the above-mentioned relative ratios of the reduction amounts.
In addition, the evaporation rates of known organic solvents are described in Table 5, and the like of pages 17 to 19 in "Latest Coating Technology" (1983, published by Sogo Gijutsu Center), and such known values may be appropriately adopted.
In addition, in the present specification, the viscosity of the solvent is a value obtained by measuring the viscosity of the composition (solvent) at 25°C using a B type viscometer.
Specific examples of the solvent having a viscosity of 4.0 mPa·s or less and a relative evaporation rate of 5.0 or less in a case where the evaporation rate of butyl acetate is 1.0 include methyl ethyl ketone, methyl isobutyl ketone, butyl acetate, propylene glycol monoethyl ether, cyclohexanone, and butyl cellosolve.
The viscosity is preferably 3.5 mPa·s or less and more preferably 2.0 mPa·s or less. In addition, the relative evaporation rate is preferably 4.0 or less and more preferably 2.0 or less.
By using the composition including the solvent whose viscosity and relative evaporation rate are within the above ranges, in a case of combination of spray coating and spin coating, or dip coating described later, a cured layer of the liquid crystal compound having a very small variation in film thickness even with respect to the curved surface can be formed.

<Other Additives>

The liquid crystal composition (hereinafter, also simply referred to as "composition") including the liquid crystal compound may further include other additives.
For example, a polymerization initiator may be included in the composition. The polymerization initiator to be used is selected according to the type of polymerization reaction, and for example, a thermal polymerization initiator and a photopolymerization initiator may be exemplified. Examples of the photopolymerization initiator include an α-carbonyl compound, acyloin ether, an α-hydrocarbon-substituted aromatic acyloin compound, a polynuclear quinone compound, and a combination of triarylimidazol dimer and p-aminophenyl ketone.
The amount of the polymerization initiator used is preferably 0.01% to 20% by mass and more preferably 0.5% to 5% by mass with the total solid content of the composition.
In addition, from the viewpoint of the uniformity of the coating film and the hardness of the film, a polymerizable

monomer may be included in the composition including the liquid crystal compound.

Examples of the polymerizable monomer include a radically polymerizable compound and a cationically polymerizable compound, and preferable is a radically polymerizable polyfunctional monomer. As the polymerizable monomer, a compound which can be copolymerized with the liquid crystal compound containing the polymerizable group is preferable. Examples of such a compound include those described in paragraphs [0018] to [0020] of JP2002-296423A.

The amount of the polymerizable monomer used is preferably 1% to 50% by mass and more preferably 2% to 30% by mass with respect to the total mass of the liquid crystal compound.

In addition, from the viewpoint of the uniformity of the coating film and the hardness of the film, a surfactant may be included in the composition including the liquid crystal compound.

Examples of the surfactant include the compounds known in the related art, and particularly, a fluorine-based compound is preferable. Specifically, examples thereof include the compounds described in paragraphs [0028] to [0056] of JP2001-330725A and the compounds described in paragraphs [0069] to [0126] of JP2003-295212.

In addition, various aligning agents such as vertical alignment promoting agents such as a polarizer interface-side vertically aligning agent, and an air interface-side vertically aligning agent, and horizontal alignment promoting agents such as a polarizer interface-side horizontally aligning agent and an air interface-side horizontally aligning agent may be included in the composition including the liquid crystal compound.

Further, an adhesion improver, a plasticizer, a polymer, and the like other than the above components may be included in the composition including the liquid crystal compound.

3. Another Layer

The optical article according to the embodiment of the present invention may comprise the cured layer provided directly on the surface of the solid base body or the cured layer provided on the surface of the solid base body via another layer. An alignment film or an undercoat layer for forming a coating film of the liquid crystal composition may be provided between the solid base body and the cured layer. Further, an optically isotropic layer may be provided between the solid base body and the cured layer or on the surface side of the cured layer.

For example, as another layer, an alignment film may be exemplified. By providing an alignment film, the liquid crystal alignment state is easily controlled. The details of the alignment film will be described in detail.

「Method of Producing Optical Article」

A method of producing an optical article according to the embodiment of the present invention comprises a coating step of applying a liquid crystal composition directly or via another layer, on a surface of a solid base body having a curved surface, the surface including at least a part of the curved surface, a heating step, and a photocuring step.

In the coating step, the liquid crystal composition which includes the liquid crystal compound and the solvent having a viscosity of 4.0 mPa·s or less and a relative evaporation rate of 5.0 or less in a case where an evaporation rate of butyl acetate is 1.0, and in which the proportion of the solvent is 20% by mass or more in all the solvents, is applied.

The coating step is preferably a spray coating step of applying the liquid crystal composition by spray coating while keeping a constant distance between a spray nozzle and the surface of the solid base body in a normal direction, a spin coating step of applying the liquid crystal composition by spin coating, or a dip coating step of applying the liquid crystal composition by dip coating. However, the coating step is not limited to the above-mentioned spray coating, spin coating, or dip coating and other coating methods such as an ink jet method can also be applied.

In the heating step, the solvent is evaporated, and in the photocuring step, the liquid crystal compound is cured by irradiating the coating film with light (for example, UV light).

By the above method, it is possible to produce an optical article comprising a cured layer in which a variation in film thicknesses measured at 20 random places in the cured layer is within 10% of the average film thickness of the film thicknesses measured at the 20 random places.

Hereinafter, the details of the method of producing an optical article will be described.

(1) Surface Treatment of Solid Base Body

The surface of the solid base body may be subjected to surface treatment before an alignment film, an undercoat layer, or a cured layer is formed. Examples of surface treatment methods include a method of treating the surface of the solid base body with corona or plasma in a vacuum or in the atmospheric pressure, a method of treating the surface of the solid base body with a laser, a method of treating the surface of the solid base body with ozone; a method of subjecting the surface of the solid base body to saponifying treatment, a method of subjecting the surface of the solid base body to flame treatment, a method of applying a coupling agent to the surface of the solid base body to conduct primer treatment, and a graft polymerization method of causing a reactive monomer or a polymer having reactivity to

adhere to the surface of the solid base body, and then radiating radial rays, plasma or ultraviolet rays thereto to cause a reaction of the monomer or polymer. Among these, the method of treating the surface of the solid base body with corona or plasma in a vacuum or in the atmospheric pressure is preferable.

The method of treating the surface of the solid base body with corona or plasma under pressure near atmospheric pressure is, for example, a method of setting the solid base body between opposed electrodes under a pressure close to the atmospheric pressure, and then generating corona or plasma to treat the surface of the solid base body, a method of causing a gas to flow into a gap between opposed electrodes, making the gas into plasma between the electrodes, and blowing the plasma-state gas onto the solid base body, or a method of generating glow discharge plasma under a low pressure to treat the surface of the solid base body.

Among these, the method of setting the solid base body between opposed electrodes under a pressure close to the atmospheric pressure, and then generating corona or plasma to treat the surface of the solid base body or the method of causing a gas to flow into a gap between opposed electrodes, making the gas into plasma between the electrodes, and blowing the plasma-state gas onto the solid base body is preferable. Usually, the surface treatment with corona or plasma can be performed using a commercially available surface treatment apparatus.

In addition, the surface of the solid base body on which an alignment film is not formed may be subjected to hard coat treatment, antistatic treatment, or the like. In addition, the solid base body may contain an additive such as an ultraviolet absorber within a range that does not affect performance.

(2) Coating Step of Composition Including Liquid Crystal Compound

In the coating step, the composition including the liquid crystal compound is applied to the surface of the base body directly or via another layer. As the coating method of the composition including the liquid crystal compound, spray coating, spin coating, or dip coating is preferably used. The coating method is not limited thereto and an ink jet method may be used.

<Spray Coating>

Spray coating is a method of spraying and applying a coating liquid in the form of fine liquid droplets from a spray nozzle. For example, either a one-fluid nozzle or a two-fluid nozzle can be applied as the nozzle shape, and there are various nozzle shapes depending on a jetting amount, and a spray pattern (a fan shape, a column shape, or a shower shape). Any of these can be applied. Generally, the film thickness of the coating film can be controlled by the concentration of the coating liquid, the jetting amount, and a distance between the base body and the nozzle. In a case where the concentration of the liquid is the same, a thicker film can be obtained by increasing the jetting amount and reducing the distance between the base body and the nozzle.

It is preferable that the spray coating is performed by placing the solid base body on a rotary stage, or vacuum-sucking the solid base body on a spin chuck, and performing spray coating while rotating the solid base body. There are cases where the method of performing spray coating while rotating the solid base body is referred to as a combination of spray coating and spin coating.

<Spin Coating>

Spin coating is performed by rotating the base body in a state in which the base body is vacuum-sucked on a spin chuck, adding and supplying a coating liquid dropwise on the surface of the base body from directly above the center of rotation, and spreading the coating liquid from the center of the base body to the entire surrounding area by centrifugal force. In this kind of coating apparatus, the film thickness of the coating film can be controlled by the concentration of the coating liquid and the rotation speed of the spin chuck (base body). In a case where the concentration of the solution is the same, a thicker film can be obtained by reducing the rotation speed.

<Dip Coating>

In dip coating, a method of immersing the base body in a solution in a coating tank and pulling up the immersed base body from the coating tank, and a method of draining the solution from the coating tank (drain method) are used. In this kind of coating apparatus, the concentration of the solution, the immersion time, and the pulling-up speed (or the lowering speed of the solution level) are parameters, and in the dip coating, the immersion time and the pulling-up speed are parameters. Generally, the film thickness becomes larger as the values of the concentration of the solution, the immersion time, and the pulling-up speed (or the lowering speed of the solution level) become larger.

(3) Heating Step

The heating step is a step of heating the solid base body to which the composition is applied to a predetermined temperature. In the heating step, volatilization of the solvent the coating film of the composition is promoted, and the liquid crystal compound is aligned in a desired alignment state.

(4) Photocuring Step

The photocuring step is a step of irradiating the coating film of the composition with light such as ultraviolet ray to cure the liquid crystal compound. In the photocuring step, the coating film of the composition is irradiated with an ultraviolet ray using an ultraviolet irradiation light source such as a metal halide lamp (manufactured by Eye Graphics Co., Ltd.) and the liquid crystal compound is cured while fixing the alignment state thereof.

「First Embodiment of Optical Article」

An optical article according to a first embodiment of the present invention is an optical article having an optical action of changing the polarization state of light rays, and the cured layer has a function as a phase difference plate. Such an optical article can be used for an optical device, an electro-optical device or a security article.

In order to make the cured layer to function as a phase difference plate, the in-plane retardation Re(550) is preferably 90 to 320 nm.

Hereinafter, a case where the cured layer is a λ/2 plate and a case where the cured layer is a λ/4 plate will be described.

<λ/2 Plate>

The λ/2 plate is an optically anisotropic layer in which the in-plane retardation Re(λ) at a specific wavelength of λ nm satisfies Re(λ) = λ/2. This equation may be satisfied at any wavelength (for example, 550 nm) in a visible light range. It is preferable that the in-plane retardation Re(550) at a wavelength of 550 nm satisfies the following relationship.

$$210\ \text{nm} \leq Re(550) \leq 300\ \text{nm}$$

In the relationship, it is more preferable that a relationship of 220 nm ≤ Re(550) ≤ 290 nm is satisfied.

<λ/4 Plate>

The λ/4 plate (a plate having a λ/4 function) is a plate having a function of converting linearly polarized light having a specific wavelength into circularly polarized light or circularly polarized light into linearly polarized light. More specifically, the λ/4 plate refers to a plate of which the in-plane retardation Re(λ) at a predetermined wavelength of λ nm satisfies Re(λ) = λ/4 (or odd times thereof). This expression may be satisfied at any wavelength in a visible light range (for example, 550 nm), but it is preferable that the in-plane retardation Re(550) at a wavelength of 550 nm satisfies the following relationship.

$$100\ \text{nm} \leq Re(550) \leq 160\ \text{nm}$$

In the relationship, it is more preferable that a relationship of 110 nm ≤ Re(550) ≤ 150 nm is satisfied.

Circularly polarized light is used for defect inspection of semiconductor silicon wafers, promotion of plant growth, and aerosol detection in the atmosphere. In a case where the cured layer of the optical article has a function of the above-mentioned λ/4 plate, the circularly polarized light can be emitted and detected over a wide range by utilizing the curved surface structure and thus it is possible to contribute to expansion of defect inspection range, expansion of plant production area, expansion of aerosol detection range, and the like.

<Alignment Film>

In the optical article according to the embodiment of the present invention, an alignment film having a function of defining the alignment direction of the liquid crystal compound may be included.

The alignment film in the present invention is an alignment film having an alignment restriction force of aligning liquid crystals in a (polymerizable) liquid crystal compound in the desired direction.

Generally, the alignment film includes a polymer as a main component. The polymer materials for alignment films are described in many documents and many commercially available products can be used. Examples of the polymer material to be used include polyamides having an amide bond in the molecule, polyimides having an imide bond in the molecule and polyamic acids which are hydrolyzates thereof, polyvinyl alcohols, alkyl-modified polyvinyl alcohols, polyacrylamides, polyoxazoles, polyethyleneimines, polystyrenes, polyvinylpyrrolidones, polyacrylic acids, and polyacrylic acid esters. Two or more of these alignable polymers may be used in combination.

The alignment film including the alignable polymer is usually obtained by applying an alignment film forming composition prepared by dissolving an alignable polymer in a solvent to the solid base body, and removing the solvent to form a coating film, or by applying the alignment film forming composition to the solid base body, removing the solvent to form a coating film, and rubbing the coating film (rubbing method).

Examples of the solvent include water; alcohol solvents such as methanol, ethanol, ethylene glycol, isopropyl alcohol, propylene glycol, methyl cellosolve, butyl cellosolve, and propylene glycol monomethyl ether; ester solvents such as ethyl acetate, butyl acetate, ethylene glycol methyl ether acetate, γ-butyrolactone, propylene glycol methyl ether acetate, and ethyl lactate; ketone solvents such as acetone, methyl ethyl ketone, cyclopentanone, cyclohexanone, methyl amyl ketone, and methyl isobutyl ketone; aliphatic hydrocarbon solvents such as pentane, hexane, and heptane; aromatic hydrocarbon solvents such as toluene and xylene; nitrile solvents such as acetonitrile; ether solvents such as tetrahydrofuran and dimethoxyethane; and chlorinated hydrocarbon solvents such as such as chloroform and chlorobenzene. These solvents may be used alone or in combination of two or more thereof.

As the alignment film forming composition, a commercially available alignable material may be used as it is. Examples of the commercially available alignable material include SUNEVER (registered trademark, manufactured by Nissan Chemical Industries, Ltd.) and OPTMER (registered trademark, manufactured by JSR Corporation).

The concentration of the alignable polymer in the alignment film forming composition may be within the range where the alignable polymer material can be completely dissolved in the solvent, and is preferably 0.1% or more and 20% or less and more preferably 0.1% or more and 10% or less in terms of solid content relative to the solution.

The film thickness of the alignment film is not particularly limited, but is usually 20 μm or less. In the above range, the film thickness is preferably 0.01 to 10 μm, more preferably 0.01 to 5 μm, and still more preferably 0.01 to 1 μm.

Examples of a method of removing the solvent included in the alignment film forming composition include methods such as natural drying, air drying, heating drying, and vacuum drying. In a case of heating drying, the temperature is usually 60°C or higher and 160°C or lower and preferably 80°C or higher and 140°C or lower.

In order to impart the alignment restriction force to the alignment film, it is preferable to perform rubbing (rubbing method) as required. As a method of imparting the alignment restriction force by the rubbing method, a method in which an alignable polymer film the surface of the solid base body, which has been formed by applying the alignment film forming composition to the solid base body, followed by annealing, is brought into contact with a rotating rubbing roll having a rubbing cloth wound therearound may be exemplified.

<<Photoalignment Film>>

In the present invention, a photoalignment film that exhibits a function of defining the alignment direction of the liquid crystal compound by irradiating the solid base body with polarized light is preferable, and from the viewpoint that rubbing is not required on the curved surface of the solid base body, the production efficiency is high. The photoalignment film is usually obtained by applying an alignment film forming composition including a polymer or a monomer having a photoreactive group, and a solvent to the solid base body, and irradiating the solid base body with light (preferably polarized UV). The photoalignment film is more preferable in that the direction of the alignment restriction force can be arbitrarily controlled by selecting the polarization direction of the emitted light.

The photoreactive group is a group that produces liquid crystal alignability by irradiation with light, and groups involved in a photoreaction that gives the origin to liquid crystal alignability produced by irradiation with light, such as a molecule alignment induction or isomerization reaction, a dimerization reaction, a photocrosslinking reaction, or a photodegradation reaction may be exemplified. Among such photoreactive groups, groups involved in a dimerization reaction or a photocrosslinking reaction have excellent alignment properties and thus are preferable. As photoreactive groups, groups having an unsaturated bond are preferable, and groups having a double bond are more preferable. Among these, and groups having at least one member selected from the group consisting of a carbon-carbon double bond (C=C bond), a carbon-nitrogen double bond (C=N bond), a nitrogen-nitrogen double bond (N=N bond), and a carbon-oxygen double bond (C=O bond) are preferable.

Examples of photoreactive groups having a C=C bond include a vinyl group, a polyene group, a stilbene group, a stilbazole group, a stilbazolium group, a chalcone group, and a cinnamoyl group. Examples of photoreactive groups having a C=N bond include groups having the structure of aromatic Schiff base, aromatic hydrazone, and the like.

Examples of photoreactive groups having an N=N bond include an azobenzene group, an azonaphthalene group, an aromatic heterocyclic azo group, a bisazo group, a formazan group, and a group having an azoxybenzene structure. Examples of photoreactive groups having a C=O bond include a benzophenone group, a coumarin group, an anthraquinone group, and a maleimide group. These groups may have substituents such as an alkyl group, an alkoxy group, an aryl group, an allyloxy group, a cyano group, an alkoxycarbonyl group, a hydroxyl group, a sulfonic acid group, and a halogenated alkyl group.

Since the irradiation amount of polarized light required for photoalignment is relatively small and a photoalignment film having excellent heat stability and temporal stability is easily obtained, a cinnamoyl group and a chalcone group are preferable. As a monomer or polymer having a photoreactive group, groups having a cinnamoyl group, which have a cinnamic acid structure at the terminal of the monomer side chain or polymer side chain, are particularly preferable.

A photoalignment inducing layer can be formed on the solid base body by applying the alignment film forming composition to the solid base body. As the solvent included in the composition, the same solvent as the solvent included in the alignment film forming composition for forming an alignment film including the above-mentioned alignable polymer can be mentioned, and the solvent can be appropriately selected depending on the solubility of the polymer or monomer having a photoreactive group.

The content of the polymer or monomer having a photoreactive group in the alignment film forming composition can be suitably adjusted according to the kind of the polymer or monomer and the thickness of a photoalignment film to be produced. The content is preferably at least 0.2% by mass or more and more preferably 0.3% by mass or more and 10% by mass or less. In the range where the properties of the photoalignment film are not significantly damaged, the alignment film forming composition may include polymer materials, such as polyvinyl alcohol and polyimide, and photosensitizers.

As the method of applying the alignment film forming composition to the solid base body, the same method as the method of applying the alignment film forming composition for forming the alignment film including the alignable polymer to the solid base body may be exemplified. As the method of removing the solvent from the applied alignment film forming composition, the same method as the method of removing the solvent from the alignment film forming composition for forming the alignment film including the alignable polymer may be exemplified.

The polarized light irradiation may adopt a method in which a film resulting from the removal of the solvent from the alignment film formation composition applied to the solid base body is directly irradiated with polarized light, or may also adopt a method in which the base body side is irradiated with polarized light so that the film is irradiated with the polarized light. In addition, the polarized light is preferably substantially parallel light. The wavelength of the polarized light to be emitted may be within a wavelength range where the photoreactive group of the polymer or monomer having a photoreactive group can absorb the light energy. Specifically, an ultraviolet ray (UV) in a wavelength range of 250 nm or more and 400 nm or less is preferable. The irradiation amount of UV is usually 1 $mJ/cm^2$ or more and 500 $mJ/cm^2$ or less, preferably 10 $mJ/cm^2$ or more and 200 $mJ/cm^2$ or less, and more preferably 10 $mJ/cm^2$ or more and 100 $mJ/cm^2$ or less. The light source used for the polarized light irradiation may be a xenon lamp, a high pressure mercury lamp, an extra-high pressure mercury lamp, a metal halide lamp, an ultraviolet light laser such as KrF or ArF, or the like. A high pressure mercury lamp, an extra-high pressure mercury lamp, or a metal halide lamp is preferable from the viewpoint that the emission intensity of ultraviolet ray at a wavelength of 313 nm is high. The light from such a light source is applied through an appropriate polarizing film, whereby polarized light irradiation can be performed. As the polarizing film, a polarizing filter, a polarizing prism such as Glan-Thompson or Glan-Taylor, or a wire-grid-type polarizing film can be used.

Incidentally, in a case where masking is performed at the time of rubbing or polarized light irradiation, it is also possible to form several regions (patterns) having different liquid crystal alignment directions.

The thickness of the (photo)alignment film is usually 10 nm or more and 10000 nm or less, preferably 10 nm or more and 1000 nm or less, and more preferably 10 nm or more and 700 nm or less.

「Second Embodiment of Optical Article」

An optical article which is one preferable embodiment of the present invention is a decorative optical article having a cholesteric liquid crystal layer having wavelength selective reflexibility as a cured layer on at least a part of the surface of a solid base body having a curved surface directly or via another layer.

The decorative optical article may have a pattern shape in which a portion satisfying the requirements of the present invention and a portion not satisfying the requirements are mixed in the plane of the article. For example, it is also preferable to form a decorative portion (exhibiting brightness) including a cured layer satisfying the requirements of the present invention so as to match with the patterning of random text information, image information, or the like and to exhibit design.

Examples of a partial decorating and forming method include applying a cholesteric liquid crystal layer with a mask (a liquid crystal layer is not applied to a mask portion), partially changing a uniformly applied cholesteric liquid

crystal layer into an isotropic layer by temperature or the like, and drawing a cholesteric liquid crystal layer by ink jetting, and the method is not limited thereto.

The decorative optical article may have a plurality of reflection regions with different peak wavelengths of selective reflection in the plane of the article or may have a region in which a plurality of cholesteric liquid crystal layers with different peak wavelengths of selective reflection are laminated. For example, a plurality of decorative optical articles having different reflection wavelengths may be transferred and laminated, cholesteric liquid crystal layers having different amounts of chiral agent may be drawn in a plurality of times in the plane of the article by ink jetting, and the like, and there is no limitation thereto.

In the decorative optical article, the cured layer may be provided on the surface of the solid base body in various pattern shapes. In a case where the cured layer has various pattern shapes, various shapes can be formed and various figures, letters, and the like are not particularly limited. The shape of each region is not particularly limited, and various shapes such as a stripe shape, a dot shape, and a mosaic shape can be used.

The size of each reflection region (formation region of the cured layer) is not particularly limited. The reflection region may have a fine structure such that reflected light of each reflection region can be monitored and observed.

The respective reflection regions may be in contact with each other or may be separated from each other.

The decorative optical article may further have any of a light transmitting region, a light reflecting layer, a light absorbing layer, an ultraviolet absorbing layer, an antireflection layer, and the like, or a combination thereof.

<Undercoat Layer>

In the decorative optical article which is one preferable embodiment of the present invention, it is preferable to form a cholesteric liquid crystal layer having wavelength selective reflexibility as a cured layer via an undercoat layer. Examples of the undercoat layer include undercoat layers including a resin obtained by curing a polyfunctional (meth) acrylic monomer such as pentaerythritol triacrylate and pentaerythritol tetraacrylate, a polyvinyl alcohol resin, a (meth) acrylic polymer resin, a polyolefin resin, a cycloolefin polymer resin, a polycarbonate resin, a polyurethane resin, a polystyrene resin, a polyimide resin, an epoxy resin, a polyester resin, and a polyether resin. In addition, a plurality of undercoat layers may be laminated.

<Cholesteric Liquid Crystal Layer: Cured Layer>

The light at which the cholesteric liquid crystal layer exhibits wavelength selective reflexibility is not particularly limited and for example, the light may be any of infrared light, visible light, and ultraviolet light.

The cholesteric liquid crystal layer is preferably a layer formed by fixing the liquid crystal compound in a cholesteric alignment state. The cholesteric alignment state may include an alignment state that reflects right circularly polarized light, an alignment state that reflects left circularly polarized light, or both states. The liquid crystal compound is not particularly limited and various known liquid crystal compounds may be used.

Fig. 1 is a scanning electron microscope (SEM) image showing the cross section of a general cholesteric liquid crystal layer. A cholesteric liquid crystal layer 1 used in the present invention preferably has a stripe pattern of bright zone B and dark zone D as shown in Fig. 1 in a case of observing the cross section using an SEM.

The SEM image in Fig. 1 merely shows the cross section of an example of the cholesteric liquid crystal layer as a reference and does not show an embodiment of a cured liquid crystal layer in which the film thickness of the present invention is uniform.

Fig. 2 is a schematic view showing a cross section of a general cholesteric liquid crystal layer.

As shown in Fig. 2, in the cross section of a general cholesteric liquid crystal layer 20, typically, a stripe pattern of bright zone B and dark zone D is observed. That is, in the cross section of the cholesteric liquid crystal layer 20, a layered structure in which the bright zone B and the dark zone D are alternately laminated is observed.

Generally, as shown in Fig. 2, the stripe pattern (layered structure) of bright zone B (a continuous line formed by the bright zone B) and dark zone D (a continuous line formed by the dark zone D) is formed so as to be parallel with the surface of a support 24, that is, the surface on which the cholesteric liquid crystal layer 20 is formed. In a case of such an embodiment, the cholesteric liquid crystal layer 20 exhibits mirror surface reflexibility. That is, in a case where light incident on the cholesteric liquid crystal layer 20 in the normal direction, the light is reflected in the normal direction but is hardly reflected in the oblique direction (refer to the arrows in Fig. 2).

In contrast, in a case where the bright zone B and the dark zone D have a waving structure (also referred to as an uneven structure or a wavy structure) like a cholesteric liquid crystal layer 26 schematically showing the cross section in Fig. 3, there is a region in which the helical axis of the liquid crystal compound forming the cholesteric liquid crystalline phase is inclined, and thus, in a case where light is incident on the cholesteric liquid crystal layer 26 from the normal direction, the incidence ray is partially reflected in the oblique direction (refer to the arrows in Fig. 3).

That is, since the bright zone B and the dark zone D have a waving structure, the cholesteric liquid crystal layer

26 has appropriate diffuse reflectivity.

A region M is a region in which the absolute value of the inclination angle with respect to the plane of the cholesteric liquid crystal layer in the continuous line of the bright zone and the dark zone of the stripe pattern is 5° or more and 90° or less and is sandwiched between mountains or valleys with an inclination angle of 0° of two points, which are closest to each other. In Fig. 3, the region M is illustrated by a dashed line. As shown in Fig. 3, the region M surrounded by the dashed line is a region sandwiched between valleys v and mountains t. The mountains t and the valleys v are areas in which the tangent line is parallel with the cholesteric liquid crystal layer forming surface of the support 24 (at an inclination of 0°).

The waving structure has at least one region M.

The mountain or the valley with an inclination angle of 0° includes a convex shape or concave shape but also includes step-like and shelf-like points as long as the inclination angle is 0°. In the waving structure, it is preferable that in the continuous line of the bright zone and the dark zone of the stripe pattern, the region M in which the absolute value of the inclination angle is 5° or more and the mounts or valleys sandwiching the region are repeated in a plurality of times.

In addition, the peak-to-peak distance of the waving structure is a distance between mountains or valleys sandwiching the region M which are closest to each other. This peak-to-peak distance is a value obtained by measuring the distances in the planar direction of the cholesteric liquid crystal layer and arithmetically averaging a length of 100 μm of the cholesteric liquid crystal layer in the cross-section major axis direction and the total film thickness.

The average value of the peak-to-peak distance of the waving structure is preferably 0.5 μm to 50 μm. The average value of the peak-to-peak distance is more preferably 1.5 μm to 10 μm and still more preferably 2.5 μm to 5.0 μm.

Since the stripe pattern of the bright zone and the dark zone has a waving structure and the average value of the peak-to-peak distance of the waving structure is set to be within the above range, the decorative brightness can be further improved.

Here, in a case where each continuous line is brought into contact with any of both interfaces of the film and is interrupted, both ends of the interrupted place are not regarded as mountains or valleys. In addition, for a bent structure in which each continuous line exists in a region 30 surrounded by a dashed line in the SEM image of Fig. 1, the continuous line is regarded as being interrupted, and both ends thereof are not regarded as mountains or valleys.

<Method of Preparing Cholesteric Liquid Crystal Layer>

The cholesteric liquid crystal layer preferably used for the decorative optical article, which is one preferable embodiment of the present invention, can be obtained by, for example, forming an undercoat layer formed of a hydrophilic resin such as polyvinyl alcohol on the solid base body, applying a composition including a liquid crystal compound thereon, and fixing the liquid crystal compound in a cholesteric alignment state. In a case where the solid base body is subjected to corona treatment and the surface of the solid base body made hydrophilic, the undercoat layer is not always necessary.

It is preferable that no alignment restriction force is imparted to the solid base body and the undercoat layer, or a weak alignment restriction force is imparted to the solid base body and the undercoat layer. For example, it is preferable that rubbing treatment is not performed or weak rubbing treatment is performed. By imparting an appropriate alignment restriction force, it is possible to obtain the preferable waving structure described above.

The surface of the solid base body or the undercoat layer is preferably smooth, but in order to obtain the above-mentioned waving structure, the solid base body or the undercoat layer may have an uneven structure in advance. The uneven structure may have regularity or irregularity (random).

As described above, the composition including the liquid crystal compound is a composition in which the proportion of the solvent having a viscosity of 4.0 mPa·s or less and a relative evaporation rate of 5.0 or less in a case where the evaporation rate of butyl acetate is 1.0 is 20% by mass or more in all the solvents. This composition is applied to the undercoat layer and dried, and then the temperature is adjusted to obtain a cholesteric alignment state. The temperature lowering rate at that time is preferably 0.4°C to 60°C per second and particularly preferably 2°C to 12°C per second. By setting the above conditions, the brightness can be enhanced.

[Surfactant]

In order to form the cholesteric liquid crystal layer as a cured layer, it is preferable that a surfactant is included in the composition. By using a surfactant, the cholesteric liquid crystal layer of the above-mentioned waving structure can be effectively formed.

In addition, in order to obtain the above-mentioned preferable waving structure, it is more preferable to use a surfactant having a property of aligning the liquid crystal compound of the cholesteric liquid crystal layer in the vicinity of the air interface to be parallel with the surface of the cholesteric liquid crystal layer. The surfactant may any of a fluorine-based surfactant or a silicone-based surfactant, but a fluorine-based surfactant is preferable.

In addition, it is preferable that the surfactant has a mesogen moiety in the molecule to align the liquid crystal compound of the cholesteric liquid crystal layer in the vicinity of the air interface to be parallel with the surface of the cholesteric liquid crystal layer, and it is preferable to have a group having a surfactant function at one terminal, preferably, at both terminals of the surfactant molecule.

It is preferable that the cholesteric liquid crystal layer preferably used for the decorative optical article, which is one preferable embodiment of the present invention, includes a large amount of surfactant in the surface on the air interface side. The uneven distribution of the surfactant on the surface can be confirmed, for example, by measuring the ratio of fluorine atoms present on both surfaces of the cholesteric liquid crystal layer.

[Chiral Agent]

The cholesteric liquid crystal layer preferably used in the decorative optical article, which is one preferable embodiment of the present invention, may include a chiral agent. As the chiral agent, various known chiral agents can be used.

Examples

Hereinafter, the present invention will be described more specifically based on examples. The materials, amounts used, ratios, treatment contents and treatment procedures shown in the examples below can be modified as appropriate in the range of not departing from the spirit of the present invention. Therefore, the scope of the present invention should not be construed as being limited to the following examples.

「Example of Optical Article that Emits Light with Changed Polarization State of Incidence Ray」

[Example 1]

<Formation of Alignment Film>

As a coating liquid for an alignment layer, SUNEVER SE-130 (manufactured by NISSAN CHEMICAL INDUSTRIES LTD.) was dissolved in N-methyl pyrrolidone to prepare a solution. A solid base body 1 (glass aspherical lens, manufactured by Edmund Optics) was fixed to the stage of a spin coater, and while rotating the solid base body, the prepared solution was applied to the surface of the above-mentioned base body 1 by a spray method using a coating apparatus to form a film. The coating liquid concentration, the spray jetting amount, the distance between the spray nozzle and the base body 1, and the coating time were adjusted such that the film thickness after drying was about 0.5 μm. The obtained coating film was heated at 100°C for 5 minutes and further heated at 250°C for 1 hour.

Thereafter, photoalignment was performed as alignment treatment. The curved surface of the base body 1 was irradiated with light (linearly polarized light) obtained by polarizing an ultraviolet ray (irradiation amount: about 1 $J/cm^2$) from a normal direction using a polarizing filter having a wavelength of 254 nm as a polarizing filter.

<Formation of Cured Layer Formed by Curing Liquid Crystal Compound>

The following coating liquid (composition 1) was prepared. The base body 1 provided with the above-mentioned alignment film was fixed to the stage of a spin coater, and while rotating the base body, the solution of the prepared composition 1 was applied to the surface of the alignment film by a spray method using a coating apparatus to form a film. "Combination of spray coating and spin coating" in Table 4 shown below means that spray coating is performed while rotating the base body 1. The coating liquid concentration, the spray jetting amount, the distance between the spray nozzle and the base body 1, and the coating time were adjusted such that the film thickness after drying was 1000 nm. Next, the film was heated and aged at a film surface temperature of 80°C for 40 seconds and air-cooled at 20 $mW/cm^2$ under air. The film was irradiated and cured with an ultraviolet ray using a metal halide lamp (manufactured by Eye Graphics Co., Ltd.), while fixing the alignment state. The formed cured layer was aligned such that slow axis direction was parallel to the polarization direction, that is, the liquid crystal was horizontally aligned.

| Composition of Coating Liquid (Composition 1) | |
|---|---|
| Rod-like liquid crystal compound 1 (L1) below | 70 parts by mass |
| Rod-like liquid crystal compound 2 (L2) below | 30 parts by mass |
| Photopolymerization initiator | 3.0 parts by mass |

(continued)

| Composition of Coating Liquid (Composition 1) | |
|---|---|
| (IRGACURE 907, manufactured by BASF SE) | |
| Sensitizer (KAYACURE DETX, manufactured by Nippon Kayaku Co., Ltd.) | 1.0 part by mass |
| Fluorine compound FP-1 below | 1.0 part by mass |
| Fluorine compound FP-2 below | 0.5 parts by mass |
| Methyl ethyl ketone (solvent) | 200 parts by mass |
| Cyclohexanone (solvent) | 200 parts by mass |

Rod-like liquid crystal compound 1

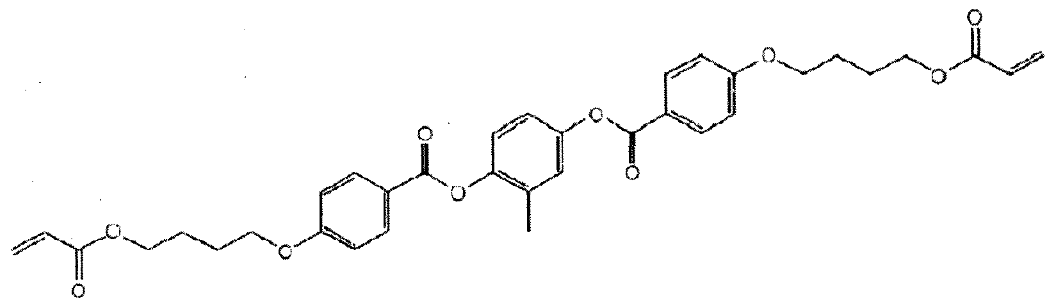

Rod-like liquid crystal compound 2

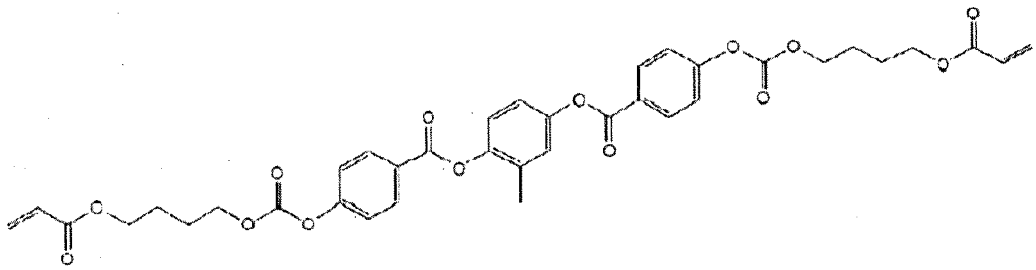

Fluorine compound FP-1

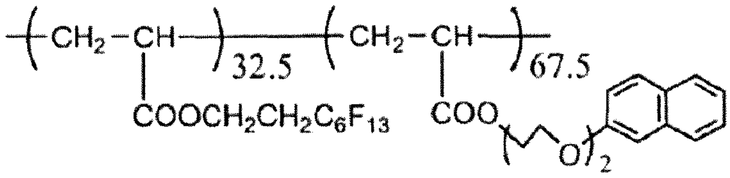

Fluorine compound FP-2

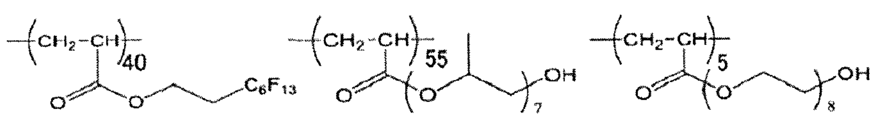

<Relative Evaporation Rate of Solvent>

The relative evaporation rate of the solvent was measured by the following manner. Two chemical balances with a hood to which nitrogen gas could be supplied were used, and 10 cm φ chalets into which a filter paper No. 5C (9 cm φ) was put were placed on both balances. In one chalet, 0.7 mL of butyl acetate was poured, and in the other chalet,

0.7 mL of a sample was poured, respectively. Nitrogen gas was supplied to each chalet at a flow rate of 30 NL/mL simultaneously at 23°C and a relative humidity of 50% under the atmospheric pressure, and the respective weights of the butyl acetate and the sample were measured simultaneously at each time 30 seconds had elapsed. The relative ratio of the reduction amount of the sample with respect to the reduction amount of the butyl acetate was obtained at 60 seconds, 90 seconds, and 120 seconds, respectively. The relative evaporation rate of the solvent of the sample was calculated as an average value of the above-mentioned relative ratios of the reduction amounts.

In a case where a plural kinds of solvents occupying 20% by mass or more in all the solvents in the above-mentioned liquid crystal composition were used, the evaporation rate of the solvent having a small relative evaporation rate value was adopted as a representative value.

The cured layer formed of the obtained coating liquid (composition 1) was evaluated as follows.

<Film Thickness: Evaluation 1>

The film thickness of the formed cured layer was measured using a multichannel spectrometer MCPD (manufactured by Otsuka Electronics Co., Ltd.). The thickness at 20 random places of the cured layer was measured, and the arithmetic average value thereof was taken as the average film thickness.

<Variation in Film Thickness: Evaluation 2>

The variation in film thicknesses was calculated from the following equation.

[Variation (%) in film thickness] = ([maximum value of thicknesses measured at 20 random places] - [minimum value of thicknesses measured at 20 random places]) × 0.5 ÷ [average film thickness]

<In-Plane Retardation: Evaluation 3>

The in-plane retardation Re(550) was measured at 20 random places of the cured layer using AxoScan OPMF-1 (manufactured by Opto Science, Inc.), and the arithmetic average thereof was calculated and taken as a Re value.

In the obtained cured layer (optically anisotropic layer), the slow axis direction was parallel to the polarization direction, that is, the rod-like liquid crystal was horizontally aligned, and the Re value of the obtained cured layer at a wavelength of 550 nm was 125 nm.

<Defect Evaluation Method: Evaluation 4>

The prepared optical article was placed between two polarizing plates arranged in a crossed Nicol state and on an X-ray film viewer, the film thickness unevenness and the number of point defects in a partial region (2 cm × 2 cm) as seen from the direction normal to the curved surface were visually evaluated.

Grade 5: The film thickness unevenness was not visually observed and there was no point defect at all.

Grade 4: The film thickness unevenness was not visually observed and the point defect was observed in one place.

Grade 3: The film thickness unevenness was not visually observed and the point defect was observed in 1 to 3 places.

Grade 2: The film thickness unevenness was not visually observed and the point defect was observed in 4 or more places.

Grade 1: The film thickness unevenness was visually observed and the point defect was observed in 4 or more places.

<Evaluation of Optical Article>

Linearly polarized light was incident on the optical article prepared in Example 1 in the direction normal to the curved surface of the article, and the transmitted light in a case where the optical axis of the optical article was rotated was analyzed.

It was confirmed that in a case where an angle formed by the incident linearly polarized light and the optical axis of the article with respect to the polarization direction was neither 0° nor 90°, the light was converted into elliptically polarized light by the cured layer and particularly, in a case where the angle was 45°, the light was converted into circularly

polarized light. Further, similar evaluations were made on 20 random places on the same curved surface, and thus it was confirmed that the incident linearly polarized light was converted to circularly polarized light at any point. In addition, it was confirmed that the optical article of Example 1 was combined with a light source that emits linearly polarized light and a light source that emits circularly polarized light in a radial shape can be formed. That is, the cured layer in the optical article of Example 1 functioned as a λ/4 plate.

The base bodies 1 to 5 used in Examples and Comparative Examples described later are shown in Table 1.

[Table 1]

| | Material | Shape | Specific example |
|---|---|---|---|
| Base body 1 | Glass | Aspherical lens | # 66-316 manufactured by Edmund Optics |
| Base body 2 | Glass | Spherical flat convex lens | # 45-367 manufactured by Edmund Optics |
| Base body 3 | Glass | Flat convex cylinder lens | Manufactured by Edmund Optics |
| Base body 4 | Glass | Curved glass | Glass plate having radius R of 150 mm (processed product) |
| Base body 5 | Plastic | Aspherical lens | # 90-208 manufactured by Edmund Optics |

The compositions of the compositions 1 to 9 used for the preparation or optical articles of Example 1, Examples 2 to 18, and Comparative Examples 1 to 3 described later are shown in Table 2.

[Table 2]

| | Liquid crystal compound | Added amount (Parts by mass) | Photopolymerization initiator | Added amount (Parts by mass) | Sensitizer | Added amount (Parts by mass) | Fluorine compound | Added amount (Parts by mass) | Aligning agent | Added amount (Parts by mass) | Others | Added amount (Parts by mass) | Solvent | Added amount (Parts by mass) |
|---|---|---|---|---|---|---|---|---|---|---|---|---|---|---|
| Composition 1 | L1<br>L2 | 70<br>30 | IRGACUR E 907 | 3.0 | KAYACURE DETX | 1.0 | FP-1<br>FP-2 | 1.0<br>0.50 | - | - | - | - | Methyl ethyl ketone Cyclohexanone | 200<br>200 |
| Composition 2 | L3<br>L4 | 80<br>20 | Same as above | Sameas above | - | - | FP-1 | 0.21 | A1<br>A2<br>A3 | 0.55<br>0.05<br>12 | TMPEOTA | 50 | Methyl ethyl ketone Cyclohexanone | 100<br>100 |
| Composition 3 | L1<br>L2 | 70<br>30 | Same as above | Sameas above | KAYACURE DETX | 1 | FP-1<br>FP-2 | 1.0<br>0.50 | - | - | - | - | Cyclohexanone | 400 |
| Composition 4 | Same as above | Sameas above | Same as above | Sameas above | Same as above | Sameas above | Same as above | Sameas above | - | - | - | - | Butyl acetate | 400 |
| Composition 5 | Same as above | Sameas above | Same as above | Sameas above | Same as above | Sameas above | Same as above | Sameas above | - | - | - | - | Methyl isobutyl ketone | 400 |
| Composition 6 | Same as above | Sameas above | Same as above | Sameas above | Same as above | Sameas above | Same as above | Sameas above | - | - | - | - | Methyl ethyl ketone | 400 |
| Composition 7 | Same as above | Sameas above | Same as above | Sameas above | Same as above | Sameas above | Same as above | Sameas above | - | - | - | - | Propylene glycol monoethyl ether acetate | 400 |
| Composition 8 | Same as above | Sameas above | Same as above | Sameas above | Same as above | Sameas above | Same as above | Sameas above | - | - | - | - | Butyl cellosolve | 400 |
| Composition 9 | Same as above | Sameas above | Same as above | Sameas above | Same as above | Sameas above | Same as above | Sameas above | - | - | - | - | Acetone | 400 |

The evaporation rate and the viscosity of the solvent included in each of the compositions 1 to 9 are shown in Table 3.

[Table 3]

| Solvent | Relative evaporation rate | Viscosity (mPa·s) |
|---|---|---|
| Cyclohexanone | 0.32 | 2.0 |
| Methyl ethvl ketone | 3.7 | 0.4 |
| Butyl acetate | 1.0 | 0.7 |
| Methyl isobutyl ketone | 1.6 | 0.6 |
| Propylene glycol monoethyl ether acetate | 0.44 | 1.1 |
| Butyl cellosolve | 0.08 | 3.4 |
| Acetone | 5.6 | 0.3 |

The configuration, the production method, and the evaluation result of each of the optical articles of Examples 1 to 18 and Comparative Examples 1 to 3 are collectively shown in Table 4.

[Table 4]

| | Solid base body | Alignment film | Composition of cured layer formed of liquid crystal compound | Solvent evaporation rate (in case of plurality of solvents, solvent having small evaporation rate) | Coating method | Evaluation 1 | Evaluation 2 | Evaluation 3 | Evaluation 4 |
|---|---|---|---|---|---|---|---|---|---|
| | | | | | | Average film thickness (nm) | Variation in film thickness (%) | Re value (nm) | Result of defect evaluation |
| Example 1 | Base body 1 | SE-130 | Composition 1 | 0.32 | Combination of spray coating and spin coating | 1000 | 5.0 | 125 | 5 |
| Example 2 | Same as above | Same as above | Same as above | 0.32 | Same as above | 720 | 4.9 | 90 | 5 |
| Example 3 | Same as above | Same as above | Same as above | 0.32 | Same as above | 1280 | 4.3 | 160 | 5 |
| Example 4 | Base body 2 | Same as above | Same as above | 0.32 | Same as above | 980 | 4.1 | 123 | 5 |
| Example 5 | Base body 3 | Same as above | Same as above | 0.32 | Same as above | 1050 | 4.8 | 131 | 5 |
| Example 6 | Base body 4 | Same as above | Same as above | 0.32 | Same as above | 950 | 5.8 | 119 | 5 |
| Example 7 | Base body 1 | Same as above | Composition 2 | 0.32 | Same as above | 1000 | 5.0 | 240 | 5 |
| Example 8 | Same as above | Same as above | Same as above | 0.32 | Same as above | 855 | 4.7 | 205 | 5 |
| Example 9 | Same as above | Same as above | Same as above | 0.32 | Same as above | 1145 | 4.8 | 275 | 5 |
| Example 10 | Same as above | Same as above | Composition 3 | 0.32 | Same as above | 1030 | 4.9 | 129 | 5 |

(continued)

| | Solid base body | Alignment film | Composition of cured layer formed of liquid crystal compound | Solvent evaporation rate (in case of plurality of solvents, solvent having small evaporation rate) | Coating method | Evaluation 1 | Evaluation 2 | Evaluation 3 | Evaluation 4 |
|---|---|---|---|---|---|---|---|---|---|
| | | | | | | Average film thickness (nm) | Variation in film thickness (%) | Re value (nm) | Result of defect evaluation |
| Example 11 | Same as above | Same as above | Composition 4 | 1.0 | Same as above | 970 | 4.1 | 121 | 5 |
| Example 12 | Same as above | Same as above | Composition 5 | 1.6 | Same as above | 1050 | 3.3 | 131 | 5 |
| Example 13 | Same as above | Same as above | Composition 6 | 3.7 | Same as above | 1030 | 6.8 | 129 | 4 |
| Example 14 | Same as above | Same as above | Composition 7 | 0.44 | Same as above | 1050 | 6.2 | 131 | 5 |
| Example 15 | Same as above | Same as above | Composition 8 | 0.08 | Same as above | 950 | 6.3 | 119 | 4 |
| Example 16 | Same as above | Same as above | Composition 1 | 0.32 | Spin coating | 950 | 9.5 | 119 | 3 |
| Example 17 | Same as above | Same as above | Same as above | 0.32 | Spray coating | 1060 | 8.0 | 133 | 3 |
| Example 18 | Same as above | Same as above | Same as above | 0.32 | Dip coating | 1080 | 9.7 | 135 | 3 |
| Comparative Example 1 | Base body 1 | SE-130 | Composition 1 | 0.32 | Coating with spoid | 1000 | 20 | 125 | 1 |

(continued)

| | Solid base body | Alignment film | Composition of cured layer formed of liquid crystal compound | Solvent evaporation rate (in case of plurality of solvents, solvent having small evaporation rate) | Coating method | Evaluation 1 | Evaluation 2 | Evaluation 3 | Evaluation 4 |
|---|---|---|---|---|---|---|---|---|---|
| | | | | | | Average film thickness (nm) | Variation in film thickness (%) | Re value (nm) | Result of defect evaluation |
| Comparative Example 2 | Same as above | Same as above | Composition 2 | 0.32 | Same as above | 1000 | 18 | 240 | 1 |
| Comparative Example 3 | Base body 1 | Same as above | Composition 9 | 5.6 | Combination of spray coating and spin coating | 980 | 25 | 123 | 1 |

[Examples 2 to 6 and 10 to 18, and Comparative Examples 1 to 3]

Optical articles of each of Examples and Comparative Examples were prepared in the same manner as in Example 1 except that the solid base body, the composition, the coating method, and the film thickness were changed as shown in Tables 1 to 4.

[Examples 7 to 9]

Optical articles of each of Examples were prepared in the same manner as in Example 1 except that the composition 2 was used to form a film having an average film thickness shown in Table 4.

<Formation of Composition 2>

The following composition 2 was prepared. The solution of the composition 2 was applied to the surface of the alignment film prepared in the same manner as in Example 1 to form a cured layer.

Next, the film was heated and aged at a film surface temperature of 128°C for 40 seconds, and then cooled to 90°C. The ultraviolet ray was emitted at 20 mW/cm$^2$ under air using an air-cooling metal halide lamp (manufactured by Eye Graphics Co., Ltd.) such that the irradiation amount was 300 mJ/cm$^2$, and a cured layer of the composition 2 was formed while fixing the alignment state.

| Composition of Coating Liquid (Composition 2) | |
|---|---|
| Discotic liquid crystal 3 (L3) below | 80 parts by mass |
| Discotic liquid crystal 4 (L4) below | 20 parts by mass |
| Alignment film interface aligning agent 1 (A1) below | 0.55 parts by mass |
| Alignment film interface aligning agent 2 (A2) below | 0.05 parts by mass |
| Fluorine compound FP-1 | 0.21 parts by mass |
| Modified trimethylolpropane triacrylate below (Abbreviation: TMPEOTA) | 5 parts by mass |
| Photopolymerization initiator (IRGACURE 907, manufactured by BASF SE) | 3.0 parts by mass |
| Interlayer aligning agent (A3) below | 1.2 parts by mass |
| Methyl ethyl ketone | 100 parts by mass |
| Cyclohexanone | 100 parts by mass |

Discotic liquid crystal 3

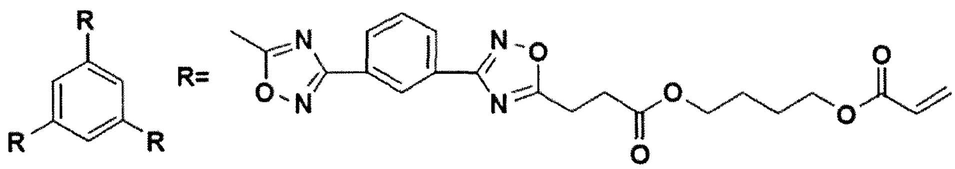

Discotic liquid crystal 4

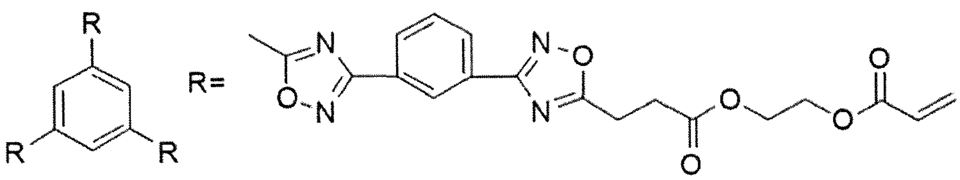

Alignment film interface aligning agent 1

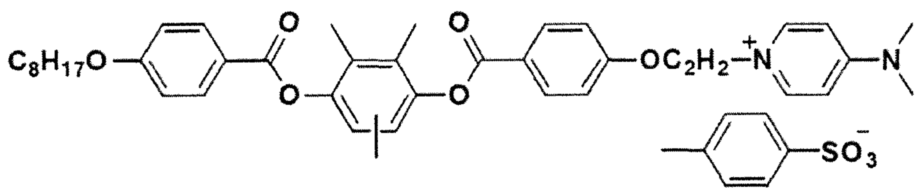

Alignment film interface aligning agent 2

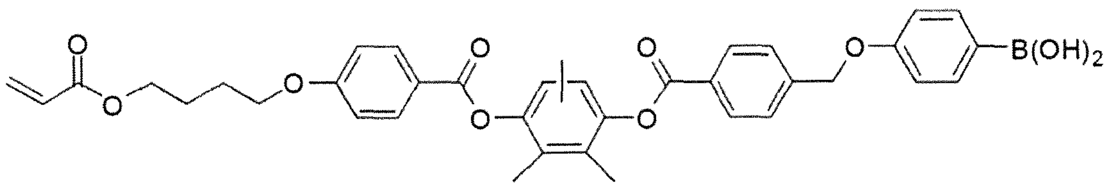

Modified trimethylolpropane triacrylate

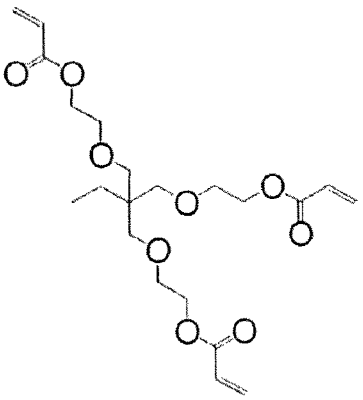

Interlayer aligning agent

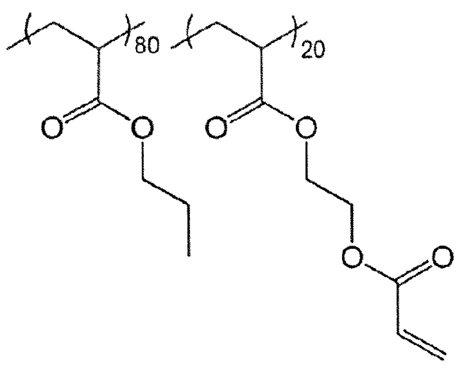

As shown in Table 4, in Examples 1 to 18 of the methods of producing the optical articles of the present invention, the variation in film thickness was 10% or less, and the result of the defect evaluation was 3 or more. In addition, in Examples 2 to 18, uniform optical properties were obtained in the region provided with the cured layer.

「Example of Optical Article Having High Degree of Design by Solid Optical Action」

[Example 19]

<Formation of Undercoat Layer>

An undercoat layer coating liquid 1 having the following composition was prepared. The base body 1 was set to the stage of a spin coater, and while rotating the base body, the prepared solution was applied to the surface of the above-mentioned base body 1 by a spray method using a coating apparatus to form a film. The coating liquid concentration, the spray jetting amount, the distance between the spray nozzle and the base body I, and the coating time were adjusted such that the film thickness after drying was about 2.0 μm. The obtained coating film was dried at 95°C for 60 seconds and was irradiated with an ultraviolet ray of 500 mJ/cm$^2$ at 25°C by an ultraviolet irradiation apparatus to fix the state.

(Undercoat Layer Coating Liquid 1)

| | |
|---|---|
| KAYARAD PET 30 (manufactured by Nippon Kayaku Co., Ltd.) | 100 parts by mass |
| IRGACURE 907 (manufactured by BASF SE) | 3.0 parts by mass |
| KAYACURE DETX (manufactured by Nippon Kayaku Co., Ltd.) | 1.0 part by mass |
| Methyl ethyl ketone | 120 parts by mass |

<Formation of Cured Layer>

As a cured layer, a cholesteric liquid crystal layer was formed.

A coating liquid for a cholesteric liquid crystal layer having the following composition (composition 10) was prepared.

The base body 1 provided with the above-mentioned undercoat layer was fixed to the stage of a spin coater, while rotating the base body, the prepared coating liquid was applied to the surface of the undercoat layer by a spray method using a coating apparatus to form a film. The coating liquid concentration, the spray jetting amount, the distance between the spray nozzle and the base body 1, and the coating time were adjusted such that the film thickness of the coating liquid after drying was 2000 nm. Thereafter, the film was dried at 95°C for 60 seconds and then the temperature was lowered at -7 °C/s until the temperature reached 25°C. Subsequently, a cured layer was formed by curing the film at 25°C using an ultraviolet irradiation apparatus and irradiating the film with an ultraviolet ray of 500 mJ/cm$^2$. Thus, an optical article of Example 19 was prepared.

(Coating Liquid for Cholesteric Liquid Crystal Layer: Composition 10)

| | |
|---|---|
| Mixture of rod-like liquid crystal compound (L5) | 100.0 parts by mass |
| IRGACURE 907 (manufactured by BASF SE) | 3.0 parts by mass |
| KAYACURE DETX (manufactured by Nippon Kayaku Co., Ltd.) | 1.0 part by mass |
| Chiral agent A1 having the following structure | 5.78 parts by mass |
| Surfactant F1 having the following structure 0. | 0.08 parts by mass |
| Methyl ethyl ketone (solvent) | 145.0 parts by mass |

Mixture of rod-like liquid crystal compound (L5)

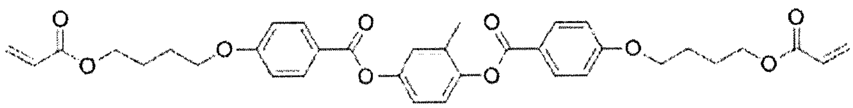

84%

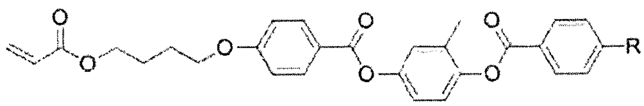

14%

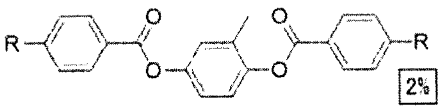

2%

R:

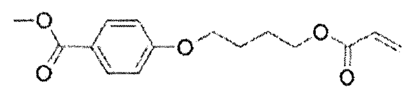

The numerical values are expressed by % by mass. In addition, R represents a group to be bonded through an oxygen atom.

Chiral agent A1

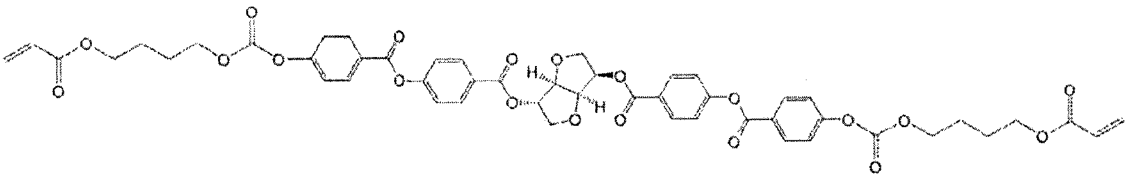

Surfactant F1

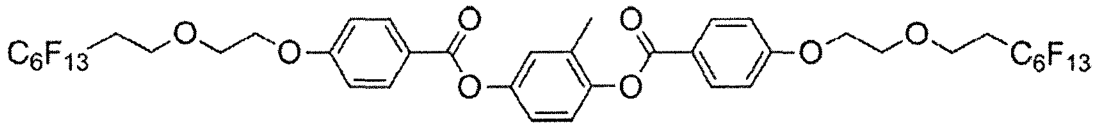

The average film thickness of the cholesteric liquid crystal layer (cured layer) and the variation in film thickness were measured by the same manner as in Evaluations 1 and 2 described above.

<Measurement of Peak-to-Peak Distance of Waving Structure: Evaluation 5>

The region M in which the absolute value of the inclination angle with respect to the plane of the cholesteric liquid crystal layer in the continuous line of the bright zone or the dark zone of the stripe pattern was 5° or more was sandwiched, the distance in the planar direction of the cholesteric liquid crystal layer for mountains or valleys with an inclination angle of 0° of two points, which are closest to each other, was measured, and a length of 100 μm of the cholesteric liquid crystal layer in the cross-section major axis direction and the total film thickness were arithmetically averaged to obtain the peak-to-peak distance of the waving structure.

<Visual Observation: Evaluation 6>

The optical article was visually observed and the display color state was evaluated.

<Evaluation of Optical Article>

In the optical article prepared in Example 19, green was displayed selectively only in a direction in which illumination light regularly reflected from every direction. The display color was uniform along the curved surface. Further, blue color was displayed in other peripheral portions.

All the colors displayed in the regular reflection direction are derived from the selective reflection of the cholesteric liquid crystal. In addition, it is assumed that the color seen in places other than the place of regular reflection is shown by viewing the cholesteric liquid crystal layer from the side and thus the reflected light is shifted to a short wavelength. In a case where the optical article was picked up and the angle of view was changed, it was possible to enjoy a change in appearance.

The compositions of the compositions 10 and 11 used in the preparation of the optical articles of Example 19, Examples 20 to 23, and Comparative Example 4 described later are shown in Table 5.

[Table 5]

| | Liquid crystal compound | Added amount (parts by mass) | Photopolymerization initiator | Added amount (parts by mass) | Sensitizer | Added amount (parts by mass) | Fluorine compound | Added amount (parts by mass) | Aligning agent | Added amount (parts by mass) | Others | Added amount (parts by mass) | Solvent | Added amount (parts by mass) |
|---|---|---|---|---|---|---|---|---|---|---|---|---|---|---|
| Composition 10 | L5 | 100 | IRGACURE 907 | 3.0 | KAYACURE DETX | 1.0 | F1 | 0.08 | - | - | A1 | 5.78 | Methyl ethyl ketone | 145 |
| Composition 11 | Same as above | Same as above | Same as above | Same as above | Same as above | Same as above | Same as above | Same as above | - | - | Same as above | Same as above | Cyclohexanone | 145 |

The configuration, the production method, and the evaluation results of the optical articles of Examples 19 to 23 and Comparative Example are collectively shown in Table 6.

[Table 6]

| | Solid base body | Undercoat layer | Composition of cured layer formed of liquid crystal compound | Solvent evaporation rate (in case of plurality of solvents, solvent having small evaporation rate) | Coating method | Evaluation 1 | Evaluation 2 | Evaluation 5 | Evaluation 6 |
|---|---|---|---|---|---|---|---|---|---|
| | | | | | | Average film thickness (nm) | Variation in film thickness (%) | Peak-to-peak distance of waving structure (μm) | Result of visual observation |
| Example 19 | Base body 1 | Undercoat layer 1 | Composition 10 | 0.32 | Combination of spray coating and spin coating | 2000 | 5.0 | 7 | Uniform |
| Example 20 | Same as above | Same as above | Same as above | 0.32 | Spin coating | 2200 | 9.1 | 7 | Uniform |
| Example 21 | Same as above | Same as above | Composition 11 | 3.7 | Combination of spray coating and spin coating | 1950 | 7.7 | 7 | Uniform |
| Example 22 | Base body 4 | Same as above | Composition 10 | 0.32 | Combination of spray coating and spin coating | 2050 | 4.9 | 7 | Uniform |
| Example 23 | Base body 5 | Same as above | Same as above | 0.32 | Combination of spray coating and spin coating | 2250 | 5.3 | 7 | Uniform |
| Comparative Example 4 | Base body 1 | Same as above | Same as above | 0.32 | Added dropwise with spoid | 2130 | 24 | 7 | Uneven |

[Examples 20 to 23 and Comparative Example 4]

An optical article of each of Examples and Comparative Examples was prepared in the same manner as in Example 19 except that the solid base body, the composition, the coating method, and the film thickness were changed as shown in Tables 5 and 6.

In the optical article prepared in Comparative Example 4, unevenness was observed only in the display color seen in a direction in which illumination light was regularly reflected. It is considered that this is probably because coating unevenness occurred and the film thickness was not uniform, resulting in a difference in reflection intensity.

Explanation of References

20, 26: cholesteric liquid crystal layer
24: support
30: region

## Claims

1. A method of producing an optical article comprising, in order:

   a coating step of applying a liquid crystal composition which includes a liquid crystal compound, and a solvent having a viscosity of 4.0 mPa·s or less and a relative evaporation rate of 5.0 or less in a case where an evaporation rate of butyl acetate is 1.0, and in which a proportion of the solvent is 20% by mass or more in all solvents, directly or via another layer on a surface of a solid base body having a curved surface, the surface including at least a part of the curved surface;
   a heating step of heating the solid base body to which the liquid crystal composition is applied; and
   a photocuring step of photocuring the liquid crystal compound to form a cured layer,
   wherein the coating step is a spray coating step of applying the liquid crystal composition by spray coating while keeping a constant distance between a spray nozzle and the surface in a normal direction, a spin coating step of applying the liquid crystal composition by spin coating, or a dip coating step of applying the liquid crystal composition by dip coating.

2. The method of producing an optical article according to claim 1,

   wherein the coating step is the spray coating step, and
   the spray coating is performed while rotating the solid base body.

3. An optical article comprising:

   a cured layer which is formed by curing a liquid crystal compound and provided directly or via another layer on a surface of a solid base body having a curved surface, the surface including at least a part of the curved surface,
   wherein a variation in film thicknesses measured at 20 random places on the cured layer is within 10% of an average film thickness of the film thicknesses measured at the 20 places.

4. The optical article according to claim 3,
   wherein the cured layer has an in-plane retardation Re(550) of 90 to 320 nm.

5. The optical article according to claim 4,
   wherein an average film thickness of the cured layer is 500 to 6000 nm.

6. The optical article according to claim 3,
   wherein the cured layer is a cholesteric liquid crystal layer having wavelength selective reflexibility.

7. The optical article according to claim 6,
   wherein the cured layer has a stripe pattern of bright zone and dark zone in a cross section thereof to be observed with a scanning electron microscope, the stripe pattern has a waving structure, and an average value of peak-to-peak distances of the waving structure is 0.5 to 50 μm.

FIG. 1

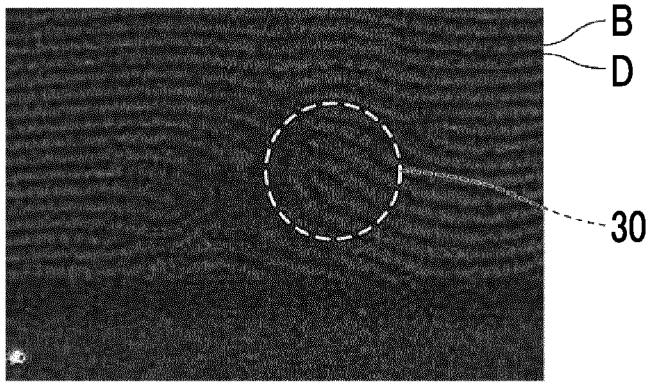


FIG. 2

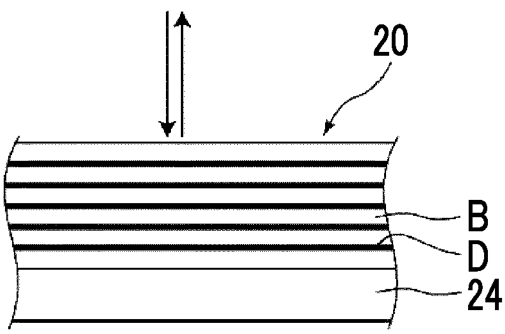


FIG. 3

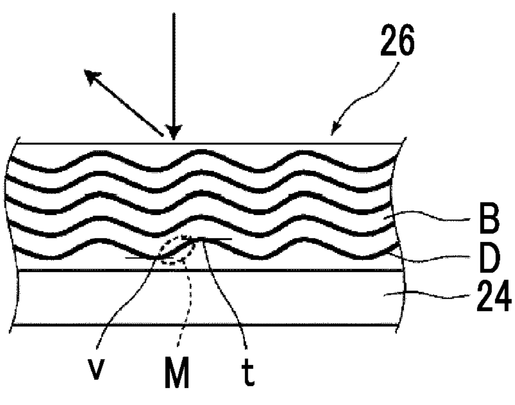

**INTERNATIONAL SEARCH REPORT**

International application No.
PCT/JP2017/039282

A. CLASSIFICATION OF SUBJECT MATTER
Int. Cl. G02B5/30(2006.01)i, B05D1/08(2006.01)i, B05D1/18(2006.01)i, B05D 1/40(2006.01)i

According to International Patent Classification (IPC) or to both national classification and IPC

B. FIELDS SEARCHED

Minimum documentation searched (classification system followed by classification symbols)
Int. Cl. G02B5/30, B05D1/08, B05D1/18, B05D1/40

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2012-032527 A (FUJIFILM CORP.) 16 February 2012, paragraph [0023], embodiments 1-3 (Family: none) | 1, 2 |
| P, Y | WO 2017/170951 A1 (NISSAN CHEMICAL INDUSTRIES, LTD.) 05 October 2017, paragraphs [0128], [0196], embodiments 1-6 (Family: none) | 1, 2 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| | |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2017/039282

C (Continuation). DOCUMENTS CONSIDERED TO BE RELEVANT

| Category* | Citation of document, with indication, where appropriate, of the relevant passages | Relevant to claim No. |
|---|---|---|
| P, Y | JP 2017-149222 A (MICWARE CO., LTD.) 31 August 2017, paragraph [0084] (Family: none) | 1, 2 |
| P, Y | JP2017-072721 A (PANASONIC INTELLECTUAL PROPERTY MANAGEMENT CO., LTD.) 13 April 2017, paragraph [0004] (Family: none) | 1, 2 |
| P, Y | JP 2017-054125 A (CANON INC.) 16 March 2017, paragraphs [0061], [0171] & US 2017/0073524 A1, paragraphs [0086], [0191] & EP 3141934 A1 & CN 106526715 A | 1, 2 |
| P, A | JP 2016-200731 A (NITTO DENKO CORP.) 01 December 2016, paragraphs [0040], [0041], [0064], [0065] (Family: none) | 1, 2 |
| A | WO 2011/149038 A1 (FUJIFILM CORP.) 01 December 2011, entire text & JP 2012-108465 A & US 2013/0083276 A1 & CN 102906606 A | 1, 2 |
| A | JP 2004-122115 A (SEIKO EPSON CORP.) 22 April 2004, entire text & US 2004/0142105 A1 & US 2007/0251448 A1 & TW 200405028 A & KR 10-2004-0012580 A & CN 1478608 A | 1, 2 |

Form PCT/ISA/210 (continuation of second sheet) (January 2015)

**INTERNATIONAL SEARCH REPORT**

International application No.
PCT/JP2017/039282

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

[see extra sheet]

1. ☐ As all required additional search fees were timely paid by the applicant, this international search report covers all searchable claims.
2. ☐ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (January 2015)

**INTERNATIONAL SEARCH REPORT**

International application No.
PCT/JP2017/039282

(Invention 1) Claims 1 and 2

The invention as in claims 1 and 2 is deprived of novelty by document 1 (see paragraph [0023] and embodiments 1-3, etc.), and therefore does not have a special technical feature. As such, claims 1 and 2 are classified as Invention 1.

(Invention 2) Claims 3-7

Claims 3-7 cannot be said to have a special technical feature identical to or corresponding to that of claims 1 and 2, which are classified as Invention 1.

Moreover, claims 3-7 are not substantially identical to or similarly closely related to any of the claims classified as Invention 1.

As such, claims 3-7 cannot be classified as Invention 1.

Claims 3-7 have a special technical feature where "the variation of film thicknesses measured at any 20 places is within 10% relative to the mean film thickness of the film thicknesses measured at the 20 places" and are therefore classified as Invention 2.

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2013137464 A
- JP 6186534 A
- JP H06186534 A
- JP 2007519013 A
- JP 2012032527 A
- JP 2012236125 A
- JP 1999513019 A
- JP H11513019 A
- JP 2005289980 A
- JP 2007108732 A
- JP 2010244038 A
- JP 2002296423 A
- JP 2001330725 A
- JP 2003295212 A

### Non-patent literature cited in the description

- **MASAO DOI.** Physics of Polymers· Dynamics of Phase Transition. Iwanami Shoten, 1992, 2
- Latest Coating Technology. Sogo Gijutsu Center, 1983, 17-19